# EUROPEAN PATENT SPECIFICATION

(11) **EP 3 282 122 B1**
(45) Date of publication and mention of the grant of the patent: **16.03.2022**
(21) Application number: 17181528.5
(22) Date of filing: 14.07.2017
(51) Int. Cl.: F03D 13/20, F03D 13/10, F03D 80/50, F03D 80/00, E04H 12/08, F16C 35/07

(54) **METHOD FOR REFURBISHING A WIND TURBINE**
VERFAHREN ZUR MODERNISIERUNG EINER WINDTURBINE
PROCÉDÉ POUR LE RÉAMÉNAGEMENT D'UNE ÉOLIENNE

(30) Priority: 08.08.2016 US 201615230790
(43) Date of publication of application: 14.02.2018
(73) Proprietor: General Electric Company, Schenectady, NY 12345 (US)
(72) Inventor: LEONARD, Jay F, Greenville, SC South Carolina 29615-4614 (US); WILSON, Ian David, Greenville, SC South Carolina 29615 (US)
(74) Representative: de Rooij, Mathieu Julien

(56) References cited:
- EP-A2- 1 065 374
- WO-A1-97/03288
- JP-A- 2007 107 411
- US-A- 4 527 072
- US-A1- 2010 170 429
- US-A1- 2012 131 876

## Description

The present invention relates to a method for refurbishing a wind turbine.

Wind power is considered one of the cleanest, most environmentally friendly energy sources presently available, and wind turbines have gained increased attention in this regard. A modern wind turbine typically includes a tower, generator, gearbox, machine head, and a rotor including one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

Wind turbine technology is rapidly progressing. Accordingly, as the technology utilized in existing wind turbines becomes outdated and/or existing wind turbines approach their designed lives, it may be desirable to refurbish such existing wind turbines. Such refurbishment can provide various advantages, including the implementation of newer, more efficient technology and components on existing base components. For example, in many cases, the machine head and, optionally, the yaw drive, can be replaced. A new, more technologically advanced machine head and optional yaw drive can be provided on to an existing tower. Accordingly, additional life and more efficient power generation can be provided with reduced capital expenses.

One concern, however, is that new components such as machine heads, etc. may not be manufactured to mate with existing components such as towers. For example, the new components may have mounting apparatus that is larger, smaller, or otherwise different from the mating mounting apparatus of the existing components.

US 2012/131876 A1 discloses methods for assembling, maintaining, and disassembling wind turbines.

Accordingly, improved wind turbines, and in particular improved apparatus and methods for refurbishing wind turbines, are desired in the art. Specifically, adapters which facilitate the connection of new components such as machine heads to existing components such as towers would be advantageous.

Various aspects and advantages of the invention will be set forth in part in the following description, or may be clear from the description.

The present invention is defined by the appended claims.

Various features, aspects and advantages of the present invention will become better understood with reference to the following description and appended claims. The accompanying drawings, which are incorporated in and constitute a part of this specification, illustrate embodiments of the invention and, together with the description, serve to explain the invention.

In the drawings:
FIG. 1 is a perspective view of a wind turbine according to embodiments of the present disclosure;
FIG. 2 illustrates a perspective, internal view of a machine head of a wind turbine according to embodiments of the present disclosure;
FIG. 3 illustrates a cross-sectional view of components of an existing wind turbine in accordance with embodiments of the present disclosure;
FIG. 4 illustrates a cross-sectional view of components of a refurbished wind turbine, including an adaptor connected between a tower and a yaw bearing in accordance with embodiments of the present disclosure;
FIG. 5 illustrates a cross-sectional view of components of a refurbished wind turbine, including an adaptor connected between a tower and a yaw bearing in accordance with embodiments of the present disclosure;
FIG. 6 illustrates a cross-sectional view of components of a refurbished wind turbine, including an adaptor connected between a tower and a yaw bearing in accordance with embodiments of the present disclosure;
FIG. 7 illustrates a cross-sectional view of components of a refurbished wind turbine, including an adaptor connected between a tower and a yaw bearing in accordance with embodiments of the present disclosure;
FIG. 8 illustrates a cross-sectional view of components of a refurbished wind turbine, including an adaptor connected between a machine head and a yaw bearing in accordance with embodiments of the present disclosure;
FIG. 9 illustrates a cross-sectional view of components of a refurbished wind turbine, including an adaptor connected between a machine head and a yaw bearing in accordance with embodiments of the present disclosure;
FIG. 10 illustrates a top schematic view of a first and second hole pattern in accordance with embodiments of the present disclosure; and
FIG. 11 illustrates a top schematic view of a first and second hole pattern in accordance with embodiments of the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims

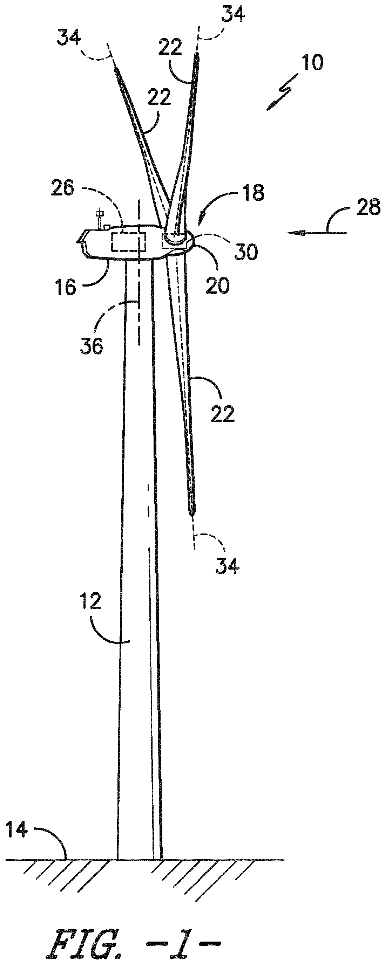

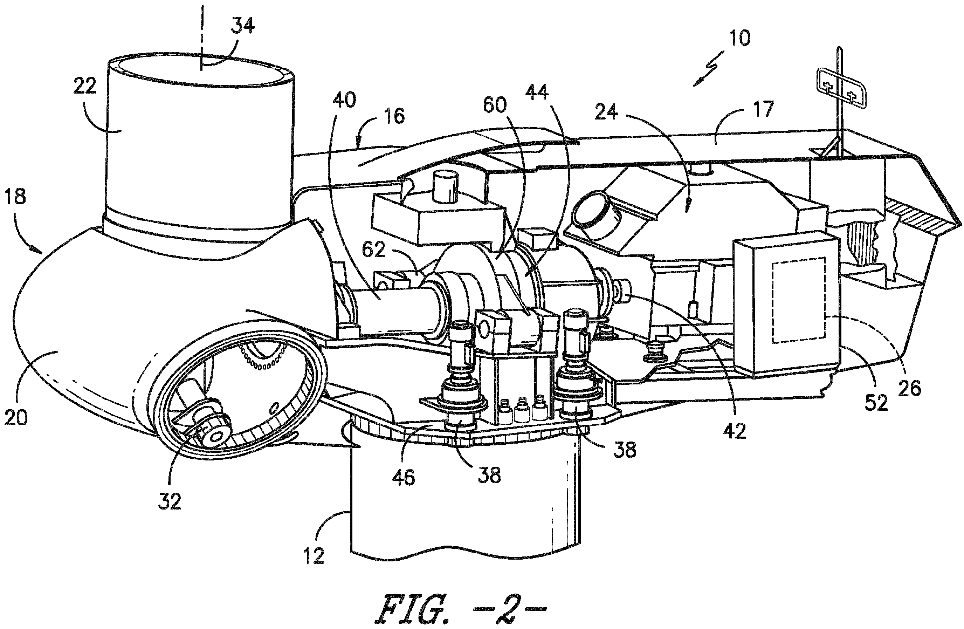

FIG. 1 illustrates perspective view of a non-claimed embodiment of a wind turbine 10. As shown, the wind turbine 10 includes a tower 12 extending from a support surface 14, a machine head 16 mounted on the tower 12, and a rotor 18 coupled to the machine head 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the machine head 16 to permit electrical energy to be produced.

As shown, the wind turbine 10 may also include a turbine control system or a turbine controller 26 centralized within the machine head 16. However, it should be appreciated that the turbine controller 26 maybe disposed at any location on or in the wind turbine 10, at any location on the support surface 14 or generally at any other location. The turbine controller 26 may generally be configured to control the various operating modes (e.g., start-up or shut-down sequences) and/or components of the wind turbine 10. For example, the controller 26 may be configured to control the blade pitch or pitch angle of each of the rotor blades 22 (i.e., an angle that determines a perspective of the rotor blades 22 with respect to the direction 28 of the wind) to control the loading on the rotor blades 22 by adjusting an angular position of at least one rotor blade 22 relative to the wind. For instance, the turbine controller 26 may control the pitch angle of the rotor blades 22, either individually or simultaneously, by transmitting suitable control signals/commands to a pitch controller of the wind turbine 10, which may be configured to control the operation of a plurality of pitch drives or pitch adjustment mechanisms 32 (FIG. 2) of the wind turbine, or by directly controlling the operation of the plurality of pitch drives or pitch adjustment mechanisms. Specifically, the rotor blades 22 may be rotatably mounted to the hub 20 by one or more pitch bearing(s) (not illustrated) such that the pitch angle may be adjusted by rotating the rotor blades 22 along their pitch axes 34 using the pitch adjustment mechanisms 32. Further, as the direction 28 of the wind changes, the turbine controller 26 may be configured to control a yaw direction of the machine head 16 about a yaw axis 36 to position the rotor blades 22 with respect to the direction 28 of the wind, thereby controlling the loads acting on the wind turbine 10. For example, the turbine controller 26 may be configured to transmit control signals/commands to a yaw drive mechanism 38 (FIG. 2) of the wind turbine 10, via a yaw controller or direct transmission, such that the machine head 16 may be rotated about the yaw axis 36.

It should be appreciated that the turbine controller 26 and/or the pitch controller 30 may generally comprise a computer or any other suitable processing unit. Thus, in several embodiments, the turbine controller 26 and/or pitch and yaw controllers may include one or more processor(s) and associated memory device(s) configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) of the turbine controller 26 and/or pitch and yaw controllers may generally comprise memory element(s) including, but are not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) may generally be configured to store suitable computer-readable instructions that, when implemented by the processor(s), configure the turbine controller 26 and/or pitch and yaw controllers to perform various computer-implemented functions. In addition, the turbine controller 26 and/or pitch and yaw controllers may also include various input/output channels for receiving inputs from sensors and/or other measurement devices and for sending control signals to various components of the wind turbine 10.

Referring now to FIG. 2, a simplified, internal view of a non-claimed embodiment of the machine head 16 of the wind turbine 10 is illustrated. As shown, a generator 24 may be disposed within the machine head 16. In general, the generator 24 may be coupled to the rotor 18 of the wind turbine 10 for generating electrical power from the rotational energy generated by the rotor 18. For example, the rotor 18 may include a main shaft 40 coupled to the hub 20 for rotation therewith. The generator 24 may then be coupled to the main shaft 40 such that rotation of the main shaft 40 drives the generator 24. For instance, in the illustrated embodiment, the generator 24 includes a generator shaft 42 rotatably coupled to the main shaft 40 through a gearbox 44. However, in other embodiments, it should be appreciated that the generator shaft 42 may be rotatably coupled directly to the main shaft 40. Alternatively, the generator 24 may be directly rotatably coupled to the main shaft 40 (often referred to as a "direct-drive wind turbine").

It should be appreciated that the main shaft 40 may generally be supported within the machine head 16 by a base frame or bedplate 46 positioned atop the wind turbine tower 12. For example, the main shaft 40 may be supported by the base frame 46 via one or more pillow blocks mounted to the base frame 46.

Additionally, as indicated above, the turbine controller 26 may also be located within the machine head 16 of the wind turbine 10. For example, as shown in the illustrated embodiment, the turbine controller 26 is disposed within a control cabinet 52 mounted to a portion of the machine head 16. However, in other embodiments, the turbine controller 26 maybe disposed at any other suitable location on and/or within the wind turbine 10 or at any suitable location remote to the wind turbine 10. Moreover, as described above, the turbine controller 26 may also be communicatively coupled to various components of the wind turbine 10 for generally controlling the wind turbine and/or such components. For example, the turbine controller 26 may be communicatively coupled to the yaw drive mechanism(s) 38 of the wind turbine 10 for controlling and/or altering the yaw direction of the machine head 16 relative to the direction 28 (FIG. 1) of the wind. Similarly, the turbine controller 26 may also be communicatively coupled to each pitch adjustment mechanism 32 of the wind turbine 10 (one of which is shown) through the pitch controller 30 for controlling and/or altering the pitch angle of the rotor blades 22 relative to the direction 28 of the wind. For instance, the turbine controller 26 may be configured to transmit a control signal/command to each pitch adjustment mechanism 32 such that one or more actuators (not shown) of the pitch adjustment mechanism 32 may be utilized to rotate the blades 22 relative to the hub 20.

Referring still to FIG. 2, as well as FIGS. 3 through 5, gearbox 44 may be coupled to main shaft 40, and may be mounted to the base frame 46. As shown, gearbox 44 may include an outer casing 60 which may surround and generally enclose the internal gearbox components, such as the various gears, etc. thereof. Further, one or more torque arms 62 may extend from the outer casing 60. Typically, two torque arms 62 extend from the outer casing 60 on generally opposing sides of the casing 60. A torque arm 62 may generally facilitate reaction and transmission of loads to which the shaft 40, etc., are subjected by transmitting these loads from the gearbox 44 to, for example, the base frame 46.

As illustrated, a nacelle 17 may surround and enclose the various components within the machine head 16. In general, the base frame 46 and nacelle 17 may form the outer surface(s) of the machine head 16.

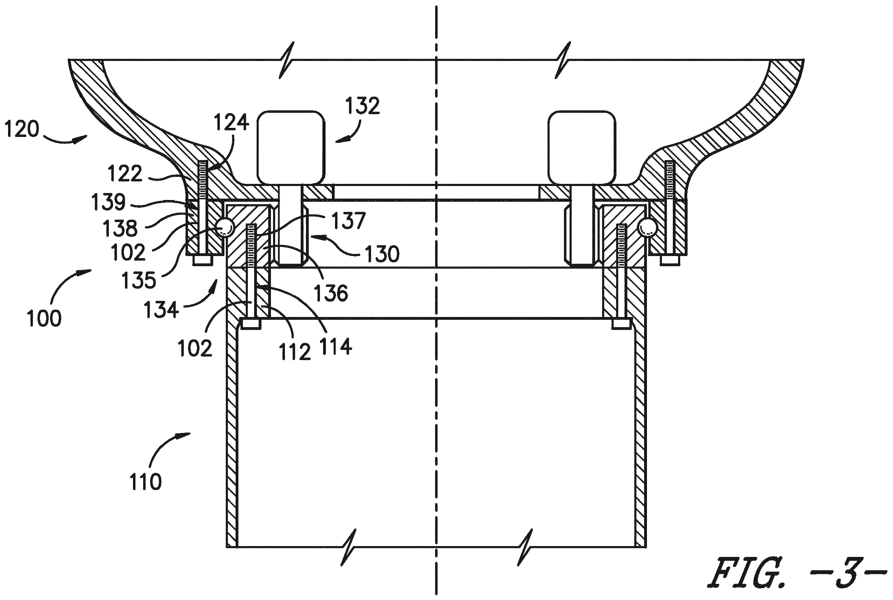

Referring now to FIG. 3, components of an existing wind turbine 100 in accordance with non-claimed embodiments of the present disclosure are provided. The existing wind turbine 100 may include a tower 110. The tower 110 may include a top flange 112 and a plurality of fastener holes 114 defined in the top flange 112. The top flange 112 may connect the tower 110 to other components of the wind turbine 100 that are provided on top of the tower 110. Further, fasteners 102, such as bolts or other suitable mechanical fastening devices, may be extended through the fastener holes 114 and fastener holes in a mating component positioned on top of the tower 110 to connect these components together.

Wind turbine 100 may further include a machine head 120, which may include a base frame 122 as shown. The base frame 122 may connect the machine head 120 to other components of the wind turbine 100 that are provided below the machine head 120. The base frame 122 may include a plurality of fastener holes 124 defined in the base frame 122. Fasteners 102, such as bolts or other suitable mechanical fastening devices, may be extended through the fastener holes 124 and fastener holes in a mating component positioned below the machine head 120 to connect these components together.

Existing wind turbine 100 may further include a yaw drive mechanism 130, which may include a yaw drive 132 and a yaw bearing 134. The yaw bearing 134 may include an inner race 136 and an outer race 138, and may further include one or more bearings 135 disposed between the inner race 136 and outer race 138. A plurality of fastener holes 137 may be defined in the inner race 136, and a plurality of fastener holes 139 maybe defined in the outer race 139.

Each plurality of fastener holes 114, 124, 137, 139 may be provided in a particular hole pattern. The hole pattern in generally defined as a generally annular array of the plurality of fastener holes, and is defined by a maximum outer diameter (i.e. a distance between centers of the furthest apart pair of holes) and the number of holes and spacing therebetween. In the existing wind turbine 100, certain of the hole patterns may match, such that mating fastener holes align and allow fasteners 102 to be extended therethrough. For example, as shown, the fastener hole 114 pattern and fastener hole 137 patterns may match, thus allowing fasteners 102 to extend through each mating pair of holes 114, 137 to connect the top flange 112 and inner race 136. Additionally, the fastener hole 124 pattern and fastener hole 139 pattern may match, thus allowing fasteners 102 to extend through each mating pair of holes 124, 139 to connect the base frame 122 and outer race 138.

Existing wind turbine 100 may further include a rotor and other suitable components, as illustrated for example in FIGS. 1 and 2.

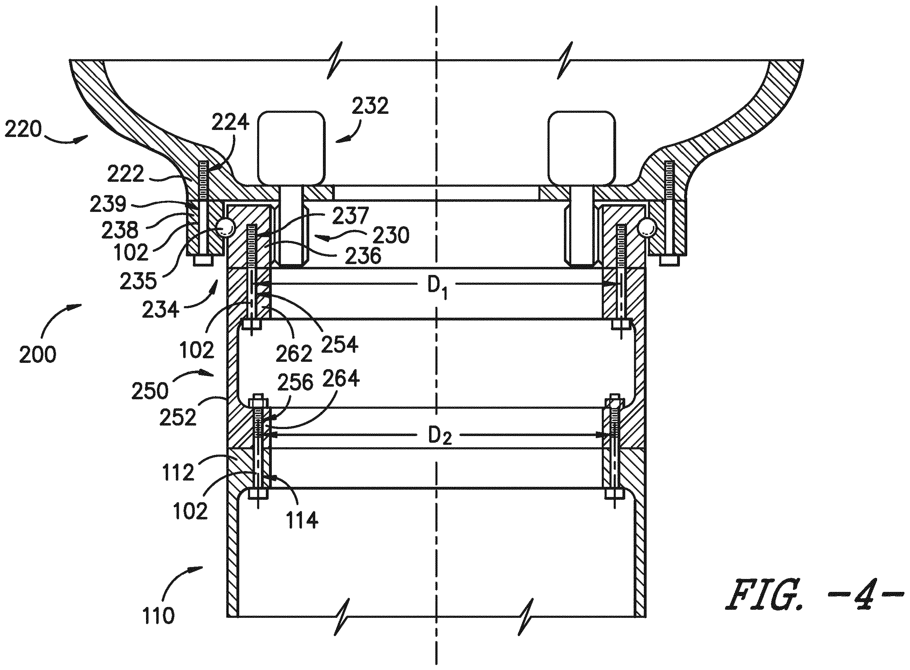

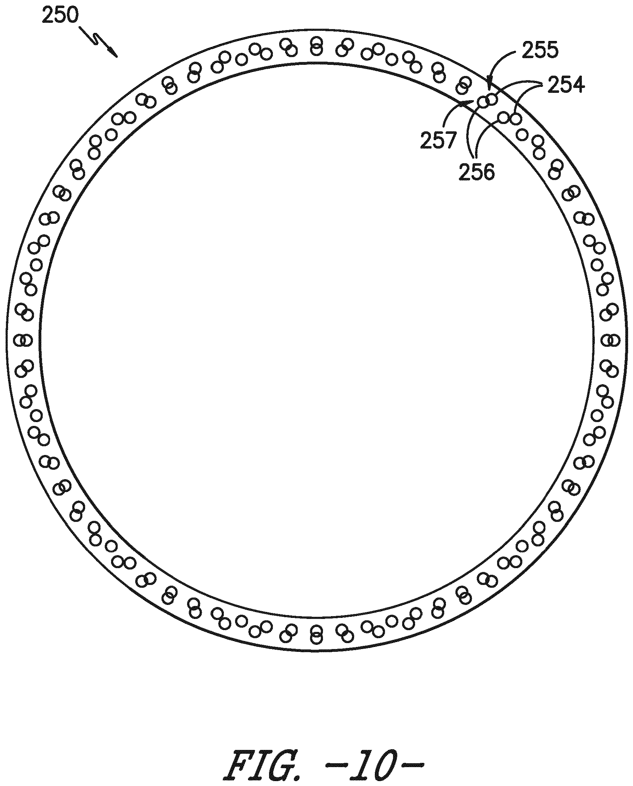

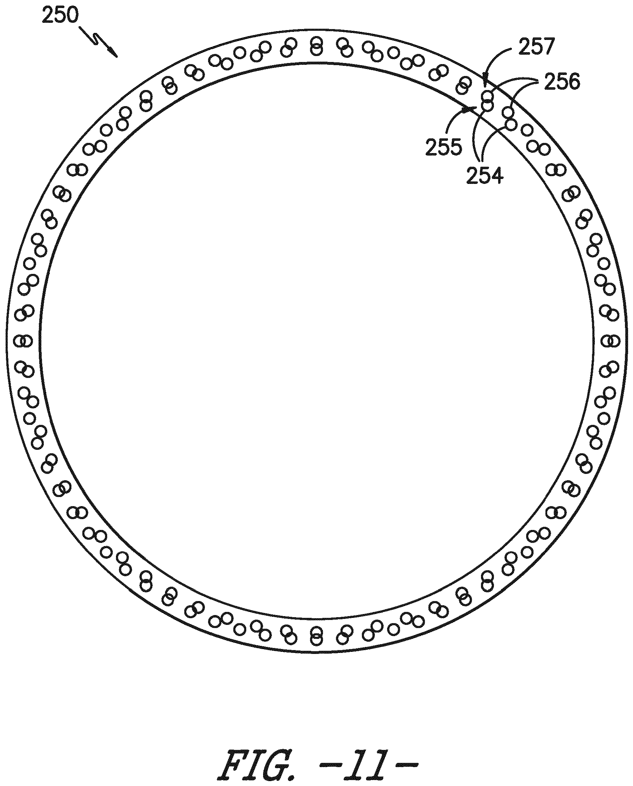

Referring now to FIGS. 4 through 11, embodiments of non-claimed refurbished wind turbines 200 and components thereof are provided. A refurbished wind turbine 200 may include a tower, which in exemplary embodiments is an existing tower 110. In some embodiments, an upper portion of the existing tower 110 may be removed for refurbishing purposes. In these embodiments, top flange 112 as discussed herein is the top flange 112 after such removal. Alternatively, however, no such removal is required. The refurbished wind turbine 200 may further include a yaw drive mechanism. In some embodiments, existing yaw drive mechanism 130 may be utilized. In other embodiments, a new yaw drive mechanism 230 may be utilized. New yaw drive mechanism 230 may include any combination of new and/or existing components. For example, the existing yaw drive 132, inner race 136, outer race 138 and/or bearings 135 may be replaced with a new yaw drive 232, inner race 236, outer race 238 and/or bearings 235. New inner race 236 may include a plurality of fastener holes 237, and new outer race 238 may include a plurality of fastener holes 239. Each plurality of fastener holes 237, 239 may be provided in a particular hole pattern. If a new inner race 236 is utilized, the fastener hole 237 pattern may be different from the fastener hole 137 pattern. If a new outer race 238 is utilized, the fastener hole 239 pattern maybe different from the fastener hole 139 pattern.

Refurbished wind turbine 200 may further include a new machine head 220, which may include a new base frame 222 and any other combination of new and/or existing components. The base frame 222 may include a plurality of fastener holes 224 defined in the base frame 222. The plurality of fastener holes 222 may be provided in a particular hole pattern. The fastener hole 222 pattern may be different from the fastener hole 122 pattern.

As shown, the refurbished wind turbine 200 may further include an adapter 250. The adapter 250 may advantageously facilitate the retrofitting of wind turbines by allowing for new machine heads 220 and/or yaw drive mechanisms 230 to be connected to existing towers 110.

In exemplary embodiments, the adapter 250 is formed from steel, cast iron, or another suitable metal. Alternatively, other suitable materials such as fiberglass, etc. may be utilized. In some exemplary embodiments, the adapter 250 may be formed from the same material as the tower 110.

An adapter 250 may include an outer sidewall 252 and define a first plurality of fastener holes 254 and a second plurality of fastener holes 256. The first plurality of fastener holes 254 may be disposed in a first hole pattern 255. The second plurality of fastener holes 256 may be disposed in a second hole pattern 257. The second hole pattern 257 is different from the first hole pattern 255.

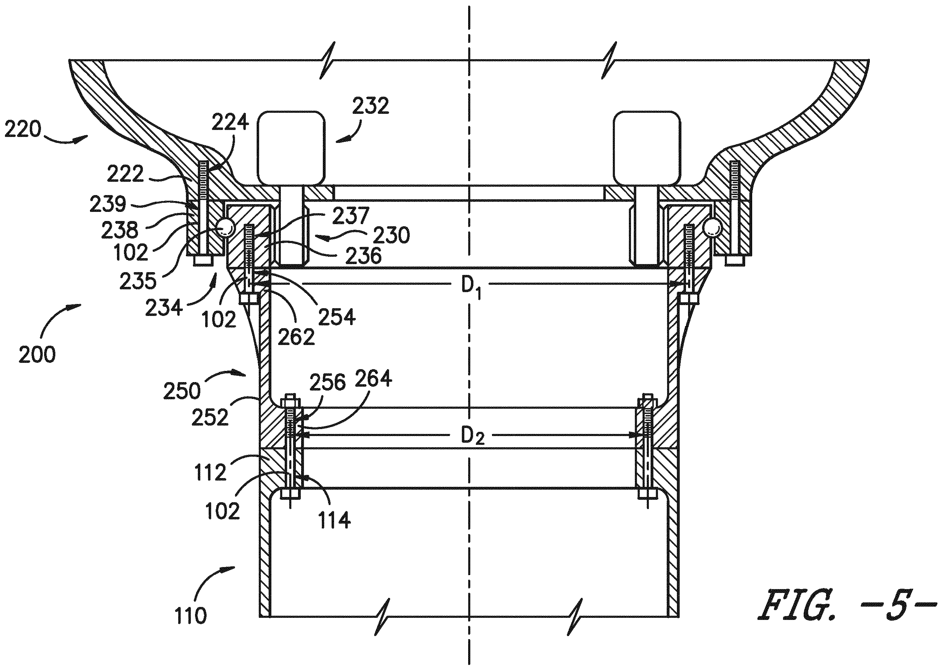

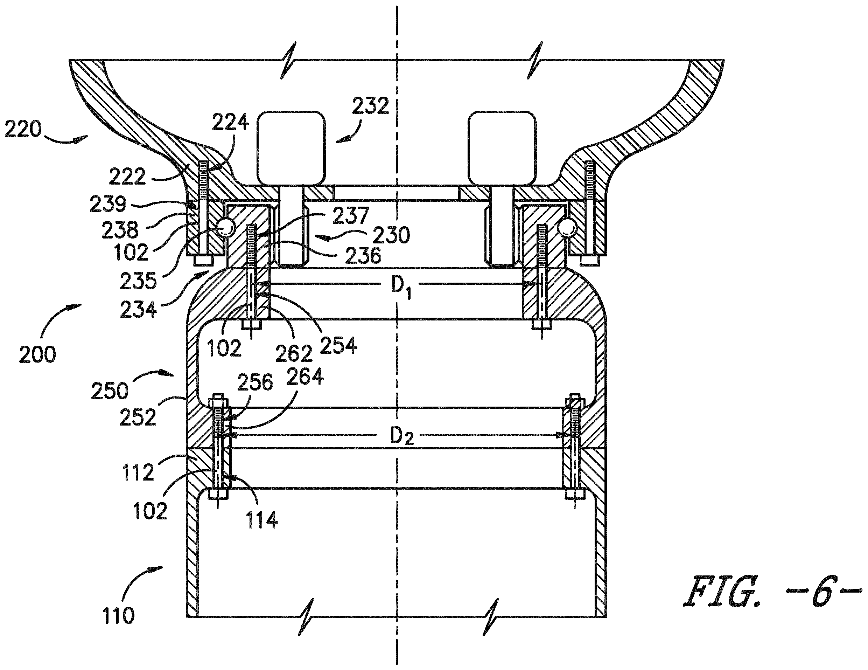

For example, the maximum outer diameters of the first and second hole patterns 255, 257 maybe different. In some embodiments, as illustrated in FIGS. 5, 7, 8 and 10, a maximum outer diameter D1 of the first hole pattern 255 is greater than a maximum outer diameter D2 of the second hole pattern 257. In other embodiments, as illustrated in FIGS. 6, 9 and 11, a maximum outer diameter D1 of the first hole pattern 255 is less than a maximum outer diameter D2 of the second hole pattern 257. In other embodiments, the maximum outer diameters D1, D2 maybe the same, but other characteristics of the hole patterns, such as the spacing and/or number of holes, is different. Irrespective of the diameters, D1, D2, the number of fastener holes 254 may be different from the number of fastener holes 256. For example, in some embodiments, the number of fastener holes 254 in the first hole pattern 255 is greater than the number of fastener holes 256 in the second hole pattern 257. In other embodiments, the number of fastener holes 254 in the first hole pattern 255 is less than the number of fastener holes 256 in the second hole pattern 257.

The adapter 250 is connected to and between the yaw bearing 134/234 and one of the base frame 222 or the top flange 112. For example, as illustrated in FIGS. 4 through 7, in some embodiments the adapter 250 is connected to and between the yaw bearing 234 and the top flange 112. For example, the adapter 250 may be connected, such as by fasteners 102, to the top flange 112 and the inner race 236. In exemplary embodiments as shown, the hole pattern of the plurality of fastener holes 237 defined in the inner race 236 matches the first hole pattern 255 and the hole pattern of the plurality of fastener holes 114 defined in the top flange 112 matches the second hole pattern 257. Fasteners 102 may thus extend through each pair of fastener holes 114, 256 to connect the adapter 250 and tower 110, and through each pair of fastener holes 237. 254 to connect the adapter 250 and the yaw bearing 234 together.

It should be noted that, in these embodiments, the hole pattern of the plurality of fastener holes 239 defined in the outer race 238 may match the hole pattern of the plurality of fastener holes 224 defined in the base frame 222. Fasteners 102 may thus extend through each pair of fastener holes 239, 224 to connect the yaw bearing 234 and machine head 220 together.

Accordingly, the adapter 250 in these embodiments advantageously facilitates the use of a new yaw bearing 234 and machine head 220.

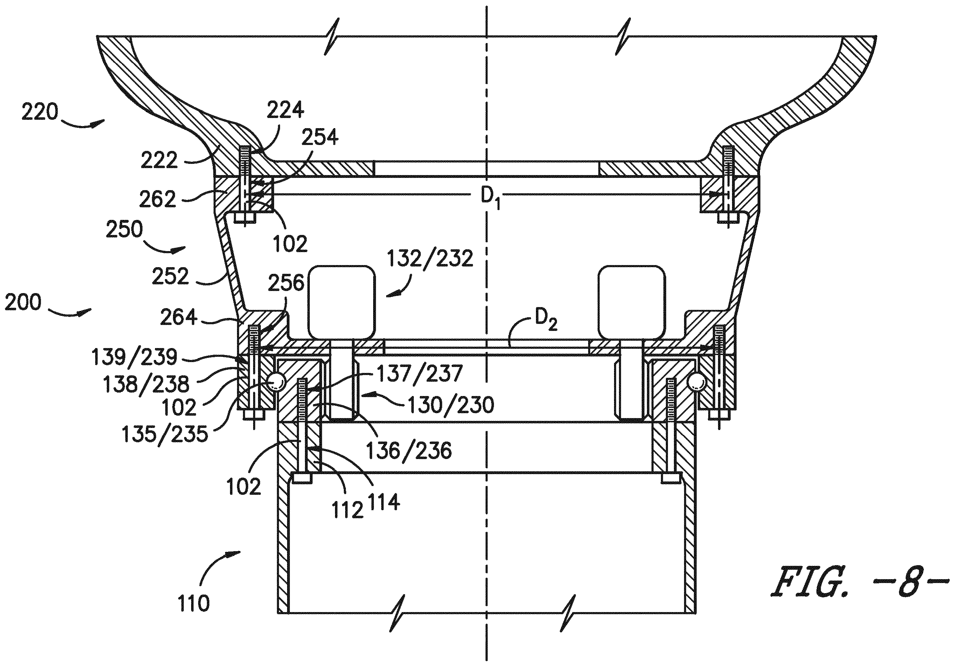

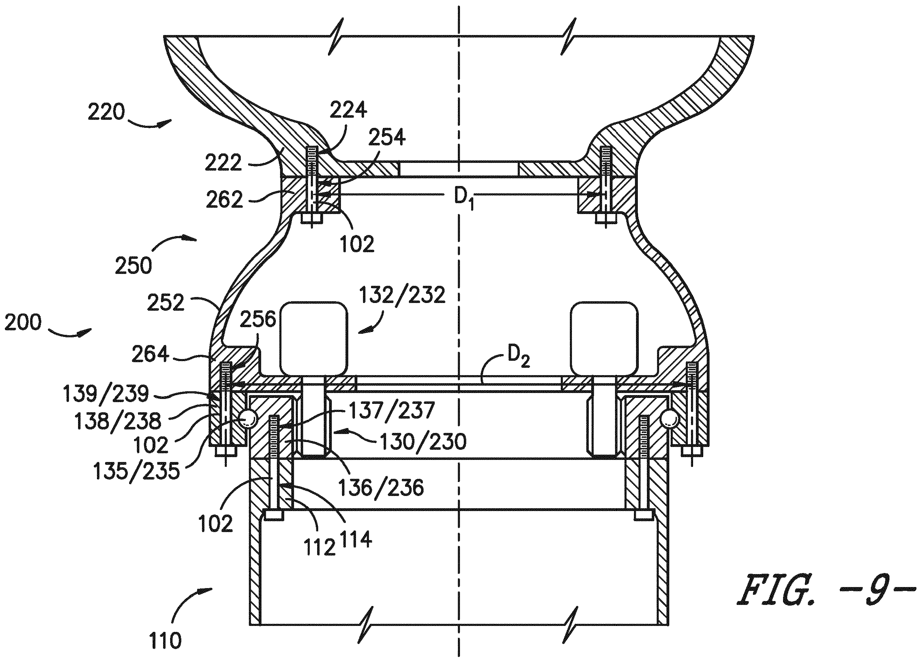

As illustrated in FIGS. 8 and 9, in some embodiments the adapter 250 is connected to and between the yaw bearing 134/234 and the base frame 222. For example, the adapter 250 may be connected, such as by fasteners 102, to the base frame 222 and the outer race 138/238. In exemplary embodiments as shown, the hole pattern of the plurality of fastener holes 224 defined in the base frame 222 matches the first hole pattern 255 and the hole pattern of the plurality of fastener holes 139/239 defined in the outer race 138/238 matches the second hole pattern 257. Fasteners 102 may thus extend through each pair of fastener holes 224, 254 to connect the adapter 250 and machine head 220, and through each pair of fastener holes 139/239, 256 to connect the adapter 250 and the yaw bearing 134/234 together.

It should be noted that, in these embodiments, the hole pattern of the plurality of fastener holes 137/237 defined in the inner race 136/236 may match the hole pattern of the plurality of fastener holes 114 defined in the top flange 112. Fasteners 102 may thus extend through each pair of fastener holes 114, 137/237 to connect the yaw bearing 134/234 and tower 110 together.

Accordingly, the adapter 250 in these embodiments advantageously facilitates the use of a new machine head 220 and, optionally, yaw bearing 234.

In some embodiments, as illustrated in FIGS. 4-6 and 8-9, the adapter 250 may include an upper flange 262 and a lower flange 264. The lower flange 264, as shown, may be spaced from the upper flange 262. In these embodiments, the first plurality of fastener holes 254 may be defined in the upper flange 262 and the second plurality of fastener holes 256 may be defined in the lower flange 264.

The adapter 250 in these embodiments may, in some embodiments, taper between the upper flange 262 and lower flange 264. For example, the taper may occur outwardly in a direction from the lower flange 264 to the upper flange 262, as illustrated in FIGS. 5 and 8, or outwardly in a direction from the upper flange 262 to the lower flange 264, as illustrated in FIGS. 6 and 9. Alternatively, the adapter 250 may have a generally constant outer diameter, as illustrated in FIG. 4.

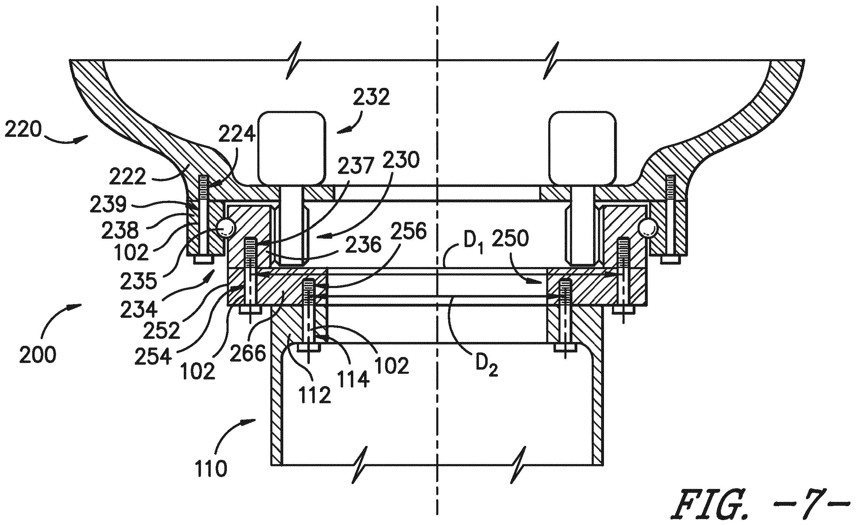

Alternatively, in some embodiments, as illustrated in FIG. 7, the adapter 250 may be a disc 266. In these embodiments, the first plurality of fastener holes 254 and the second plurality of fastener holes 256 may be defined in the disc 266.

The present disclosure is further directed to a method for refurbishing a wind turbine. According to the invention, an existing wind turbine 100 is provided. The method includes removing an existing machine head 120 from the wind turbine 100. In some embodiments, the method may further include removing an existing yaw drive mechanism 130 (or yaw bearing 134 thereof) from the wind turbine 100. Any suitable apparatus, including cranes and suitable tools for removing fasteners 102, may be utilized to remove the existing machine head 220. Any suitable apparatus, including cranes and suitable tools for removing fasteners 102, may be utilized to remove the existing machine head 220 and existing yaw drive mechanism 230 (or yaw bearing 234 thereof).

According to the invention, the method includes removing an upper portion of the existing tower 110.

According to the invention, the method includes the step of providing a new machine head 220 and an adapter 250, as discussed herein. In some embodiments, the method may further include, for example, the step of providing a new yaw drive mechanism 230 (or yaw bearing 234 thereof).

According to the invention, the method includes the step of connecting the new machine head 220 and the adapter 250 such that the adapter 250 is connected to and between the yaw bearing 134/234 and one of the base frame 222 or the top flange 112, as discussed herein. In some embodiments, the method may further include, for example, the step of connecting the new yaw bearing 234. Such connections may be facilitated by matching fastener holes and patterns thereof, as discussed herein, and the extension of fasteners 102 through matched pairs of fastener holes to connect the various components together.

This written description uses examples to disclose the invention, including the preferred mode, and also to enable any person skilled in the art to practice the invention. claims.

## Claims

1. A method for refurbishing a wind turbine (10), the method comprising:
removing an existing machine head (120) from the wind turbine (10);
removing an upper portion of an existing tower (110) from the wind turbine (10);
providing a new machine head (220) and an adapter (250), the new machine head (220) comprising a base frame (222), the new machine head (220) further comprising a plurality of fastener holes (224) defined in the base frame (222), the adapter (250) comprising an outer sidewall (252) and defining a first plurality of fastener holes (254) and a second plurality of fastener holes (256), the first plurality of fastener holes (254) disposed in a first hole pattern (255), the second plurality of fastener holes (256) disposed in a second hole pattern (257) different from the first hole pattern (255);
connecting the new machine head (220) and the adapter (250) such that the adapter (250) is connected to and between a yaw bearing (134, 234) and one of the base frame (222) or a top flange (112) of the existing tower (110) of the wind turbine (10).

2. The method of claim 1, wherein the yaw bearing (134, 234) is a new yaw bearing (234), and further comprising removing an existing yaw bearing (134) from the wind turbine (10), and wherein the adapter (250) is connected to and between the new yaw bearing (234) and the top flange (112).

3. The method of claim 2, wherein a hole pattern of the plurality of fastener holes (237) defined in an inner race (236) of the new yaw bearing (234) matches the first hole pattern (255), and a hole pattern of the plurality of fastener holes (114) defined in the top flange (112) matches the second hole pattern (257).

4. The method of claim 1, wherein the yaw bearing (134, 234) is an existing yaw bearing (134), and wherein the adapter (250) is connected to and between the existing yaw bearing (134) and the base frame (222).

5. The method of claim 4, wherein a hole pattern of the plurality of fastener holes (224) defined in the base frame (222) matches the first hole pattern (255), and a hole pattern of the plurality of fastener holes (139) defined in an outer race (138) of the existing yaw bearing (134) matches the second hole pattern (257).

6. The method of any preceding claim, wherein the adapter (250) further comprises an upper flange (262) and a lower flange (264), the lower flange (264) defining the first plurality of fastener holes (254), the upper flange (262) defining the second plurality of fastener holes (256).

7. The method of any of claims 1 to 5, wherein the adapter (250) comprises a disc (266), the disc (266) defining the first plurality of fastener holes (254) and the second plurality of fastener holes (256).

8. The method of claim 6 or 7 when they are not dependent on claim 4 or 5, wherein the adapter (250) is connected to and between the yaw bearing (134, 234) and the top flange (112).

9. The method of claim 8 when it is dependent on claim 3, wherein a hole pattern of the plurality of fastener holes (237) defined in the inner race (236) matches the first hole pattern (255), and a hole pattern of the plurality of fastener holes (114) defined in the top flange (112) matches the second hole pattern (257).

10. The method of claim 6 or 7 when they are not dependent on claims 2 or 3, wherein the adapter (250) is connected to and between the yaw bearing (134, 234) and the base frame (222).

11. The method of claim 10 when it is dependent on claim 5, wherein a hole pattern of the plurality of fastener holes (224) defined in the base frame (222) matches the first hole pattern (255), and a hole pattern of the plurality of fastener holes (139) defined in the outer race (138) matches the second hole pattern (257).

12. The method of any of claims 6 to 11, wherein a maximum outer diameter (D1) of the first hole pattern (255) is greater than a maximum outer diameter (D2) of the second hole pattern (257).

13. The method of any of claims 6 to 11, wherein a maximum outer diameter (D1) of the first hole pattern (255) is less than a maximum outer diameter (D2) of the second hole pattern (257).

14. The method of any of claims 6 to 13, wherein the number of fastener holes (254) in the first hole pattern (255) is less than or greater than the number of fastener holes (256) in the second hole pattern (257).

## Patentansprüche

1. Verfahren zur Modernisierung einer Windturbine (10), wobei das Verfahren umfasst:
Entfernen eines existierenden Maschinenkopfs (120) von der Windturbine (10);
Entfernen eines oberen Abschnitts eines existierenden Turms (110) von der Windturbine (10);
Bereitstellen eines neuen Maschinenkopfs (220) und eines Adapters (250), wobei der neue Maschinenkopf (220) einen Basisrahmen (222) umfasst, wobei der neue Maschinenkopf (220) weiter eine Vielzahl von Befestigungsbohrungen (224) umfasst, die in dem Basisrahmen (222) definiert ist, wobei der Adapter (250) eine Außenseitenwand (252) umfasst und eine erste Vielzahl von Befestigungsbohrungen (254) und eine zweite Vielzahl von Befestigungsbohrungen (256) definiert, wobei die erste Vielzahl von Befestigungsbohrungen (254) in einem ersten Bohrungsmuster (255) angeordnet ist, die zweite Vielzahl von Befestigungsbohrungen (256) in einem zweiten Bohrungsmuster (257), das von dem ersten Bohrungsmuster (255) unterschiedlich ist, angeordnet ist;
Verbinden des neuen Maschinenkopfs (220) und des Adapters (250) derart, dass der Adapter (250) an und zwischen einem Gierlager (134, 234) und einem des Basisrahmens (222) oder eines Oberseitenflanschs (112) des existierenden Turms (110) der Windturbine (10) verbunden wird.

2. Verfahren nach Anspruch 1, wobei das Gierlager (134, 234) ein neues Gierlager (234) ist, und das weiter das Entfernen eines existierenden Gierlagers (134) von der Windturbine (10) umfasst, und wobei der Adapter (250) an und zwischen dem neuen Gierlager (234) und dem Oberseitenflansch (112) verbunden wird.

3. Verfahren nach Anspruch 2, wobei ein Bohrungsmuster der Vielzahl von Befestigungsbohrungen (237), die in einem Innenring (236) des neuen Gierlagers (234) definiert ist, mit dem ersten Bohrungsmuster (255) zusammenpasst, und ein Bohrungsmuster der Vielzahl von Befestigungsbohrungen (114), die in dem Oberseitenflansch (112) definiert ist, mit dem zweiten Bohrungsmuster (257) zusammenpasst.

4. Verfahren nach Anspruch 1, wobei das Gierlager (134, 234) ein existierendes Gierlager (134) ist, und wobei der Adapter (250) an und zwischen dem existierenden Gierlager (134) und dem Basisrahmen (222) verbunden wird.

5. Verfahren nach Anspruch 4, wobei ein Bohrungsmuster der Vielzahl von Befestigungsbohrungen (224), die in dem Basisrahmen (222) definiert ist, mit dem ersten Bohrungsmuster (255) zusammenpasst, und ein Bohrungsmuster der Vielzahl von Befestigungsbohrungen (139), die in einem Außenring (138) des existierenden Gierlagers (134) definiert ist, mit dem zweiten Bohrungsmuster (257) zusammenpasst.

6. Verfahren nach einem vorstehenden Anspruch, wobei der Adapter (250) weiter einen oberen Flansch (262) und einen unteren Flansch (264) umfasst, wobei der untere Flansch (264) die erste Vielzahl von Befestigungsbohrungen (254) definiert, wobei der obere Flansch (262) die zweite Vielzahl von Befestigungsbohrungen (256) definiert.

7. Verfahren nach einem der Ansprüche 1 bis 5, wobei der Adapter (250) eine Scheibe (266) umfasst, wobei die Scheibe (266) die erste Vielzahl von Befestigungsbohrungen (254) und die zweite Vielzahl von Befestigungsbohrungen (256) definiert.

8. Verfahren nach Anspruch 6 oder 7, wenn diese nicht von Anspruch 4 oder 5 abhängig sind, wobei der Adapter (250) an und zwischen dem Gierlager (134, 234) und dem Oberseitenflansch (112) verbunden wird.

9. Verfahren nach Anspruch 8, wenn dieser von Anspruch 3 abhängig ist, wobei ein Bohrungsmuster der Vielzahl von Befestigungsbohrungen (237), die in dem Innenring (236) definiert ist, mit dem ersten Bohrungsmuster (255) zusammenpasst, und ein Bohrungsmuster der Vielzahl von Befestigungsbohrungen (114), die in dem Oberseitenflansch (112) definiert ist, mit dem zweiten Bohrungsmuster (257) zusammenpasst.

10. Verfahren nach Anspruch 6 oder 7, wenn diese nicht von den Ansprüchen 2 oder 3 abhängig sind, wobei der Adapter (250) an und zwischen dem Gierlager (134, 234) und dem Basisrahmen (222) verbunden wird.

11. Verfahren nach Anspruch 10, wenn dieser von Anspruch 5 abhängig ist, wobei ein Bohrungsmuster der Vielzahl von Befestigungsbohrungen (224), die in dem Basisrahmen (222) definiert ist, mit dem ersten Bohrungsmuster (255) zusammenpasst, und ein Bohrungsmuster der Vielzahl von Befestigungsbohrungen (139), die in dem Außenring (138) definiert ist, mit dem zweiten Bohrungsmuster (257) zusammenpasst.

12. Verfahren nach einem der Ansprüche 6 bis 11, wobei ein maximaler Außendurchmesser (D1) des ersten Bohrungsmusters (255) größer ist als ein maximaler Außendurchmesser (D2) des zweiten Bohrungsmusters (257).

13. Verfahren nach einem der Ansprüche 6 bis 11, wobei ein maximaler Außendurchmesser (D1) des ersten Bohrungsmusters (255) kleiner ist als ein maximaler Außendurchmesser (D2) des zweiten Bohrungsmusters (257).

14. Verfahren nach einem der Ansprüche 6 bis 13, wobei die Anzahl von Befestigungsbohrungen (254) in dem ersten Bohrungsmuster (255) kleiner oder größer ist als die Anzahl von Befestigungsbohrungen (256) in dem zweiten Bohrungsmuster (257).

## Revendications

1. Procédé pour le réaménagement d'une éolienne (10), le procédé comprenant :
le retrait, de l'éolienne (10), d'une tête de machine (120) existante ;
le retrait, de l'éolienne (10), d'une partie supérieure d'une tour (110) existante ;
la fourniture d'une nouvelle tête de machine (220) et d'un adaptateur (250), la nouvelle tête de machine (220) comprenant un cadre de base (222), la nouvelle tête de machine (220) comprenant en outre une pluralité de trous d'élément de fixation (224) définis dans le cadre de base (222), l'adaptateur (250) comprenant une paroi latérale externe (252) et définissant une première pluralité de trous d'élément de fixation (254) et une seconde pluralité de trous d'élément de fixation (256), la première pluralité de trous d'élément de fixation (254) étant disposée en un premier motif de trous (255), la seconde pluralité de trous d'élément de fixation (256) étant disposée en un second motif de trous (257) différent du premier motif de trous (255) ;
le raccordement de la nouvelle tête de machine (220) et de l'adaptateur (250), de sorte que l'adaptateur (250) soit raccordé à un roulement d'orientation (134, 234) et à un élément parmi le cadre de base (222) ou une bride supérieure (112) de la tour (110) existante de l'éolienne (10) et entre ceux-ci.

2. Procédé selon la revendication 1, dans lequel le roulement d'orientation (134, 234) est un nouveau roulement d'orientation (234) et comprenant en outre le retrait, de l'éolienne (10), d'un roulement d'orientation (134) existant et dans lequel l'adaptateur (250) est raccordé au nouveau roulement d'orientation (234) et à la bride supérieure (112) et entre ceux-ci.

3. Procédé selon la revendication 2, dans lequel un motif de trous de la pluralité de trous d'élément de fixation (237) défini dans une bague interne (236) du nouveau roulement d'orientation (234) correspond au premier motif de trous (255) et un motif de trous de la pluralité de trous d'élément de fixation (114) défini dans la bride supérieure (112) correspond au second motif de trous (257).

4. Procédé selon la revendication 1, dans lequel le roulement d'orientation (134, 234) est un roulement d'orientation (134) existant et dans lequel l'adaptateur (250) est raccordé au roulement d'orientation (134) existant et au cadre de base (222) et entre ceux-ci.

5. Procédé selon la revendication 4, dans lequel un motif de trous de la pluralité de trous d'élément de fixation (224) défini dans le cadre de base (222) correspond au premier motif de trous (255) et un motif de trous de la pluralité de trous d'élément de fixation (139) défini dans une bague externe (138) du roulement d'orientation (134) existant correspond au second motif de trous (257).

6. Procédé selon une quelconque revendication précédente, dans lequel l'adaptateur (250) comprend en outre une bride supérieure (262) et une bride inférieure (264), la bride inférieure (264) définissant la première pluralité de trous d'élément de fixation (254), la bride supérieure (262) définissant la seconde pluralité de trous d'élément de fixation (256).

7. Procédé selon l'une quelconque des revendications 1 à 5, dans lequel l'adaptateur (250) comprend un disque (266), le disque (266) définissant la première pluralité de trous d'élément de fixation (254) et la seconde pluralité de trous d'élément de fixation (256).

8. Procédé selon la revendication 6 ou 7, lorsqu'elles ne dépendent pas de la revendication 4 ou 5, dans lequel l'adaptateur (250) est raccordé au roulement d'orientation (134, 234) et à la bride supérieure (112) et entre ceux-ci.

9. Procédé selon la revendication 8 lorsqu'elle dépend de la revendication 3, dans lequel un motif de trous de la pluralité de trous d'élément de fixation (237) défini dans la bague interne (236) correspond au premier motif de trous (255) et un motif de trous de la pluralité de trous d'élément de fixation (114) défini dans la bride supérieure (112) correspond au second motif de trous (257).

10. Procédé selon la revendication 6 ou 7, lorsqu'elles ne dépendent pas de la revendication 2 ou 3, dans lequel l'adaptateur (250) est raccordé au roulement d'orientation (134, 234) et au cadre de base (222) et entre ceux-ci.

11. Procédé selon la revendication 10 lorsqu'elle dépend de la revendication 5, dans lequel un motif de trous de la pluralité de trous d'élément de fixation (224) défini dans le cadre de base (222) correspond au premier motif de trous (255) et un motif de trous de la pluralité de trous d'élément de fixation (139) défini dans la bague externe (138) correspond au second motif de trous (257).

12. Procédé selon l'une quelconque des revendications 6 à 11, dans lequel un diamètre externe maximal (D1) du premier motif de trous (255) est supérieur à un diamètre externe maximal (D2) du second motif de trous (257).

13. Procédé selon l'une quelconque des revendications 6 à 11, dans lequel un diamètre externe maximal (D1) du premier motif de trous (255) est inférieur à un diamètre externe maximal (D2) du second motif de trous (257).

14. Procédé selon l'une quelconque des revendications 6 à 13, dans lequel le nombre de trous d'élément de fixation (254) dans le premier motif de trous (255) est inférieur ou supérieur au nombre de trous d'élément de fixation (256) dans le second motif de trous (257).
